# EUROPEAN PATENT APPLICATION

(11) **EP 4 568 331 A2**
(43) Date of publication of application: **11.06.2025**
(21) Application number: 25172080.1
(22) Date of filing: 14.03.2023
(51) Int. Cl.: H04W 24/08

(54) **TEMPORAL RECTIFICATION OF RADIO FREQUENCY SIGNALS**

(30) Priority: 15.03.2022 US 202263320006 P
(62) Divisional of application: 23771319.3
(71) Applicant: Hawkeye 360, Inc., Herndon, Virginia 20170 (US)
(72) Inventor: MCCARTHY, Nick, Herndon, Virginia, 20170 (US); KAWAMOTO, Darek, Herndon, Virginia, 20170 (US)
(74) Representative: Piticco, Lorena

(57) **Abstract**

A method includes training a machine learning network using, as input training data, a plurality of time series representing sampled radio frequency (RF) signals, and a plurality of labels. Each label is associated with at least one time series of the plurality of time series. The labels describe one or more characteristics of emitters of the sampled RF signals. The machine learning network includes, for each label of the plurality of labels, a corresponding soft dynamic time warping (soft-DTW) terminal associated with the label. Training the machine learning network includes iteratively adjusting the weights of the soft-DTW terminals so as to reduce a value of at least one loss function; obtaining, as a result of the training, a machine learning model configured to classify new RF signal sequences by label; and providing the machine learning model to an RF sensing device.

## Description

### FIELD OF THE DISCLOSURE

The present disclosure relates to analysis of wireless signals such as radio frequency signals.

### BACKGROUND

Various electrical devices emit radio signals. For example, communications radios, emergency safety beacons, radars, television broadcast towers, wireless access points, cellular towers, cellular phones, satellite phones, and satellites, among other radio emitters, transmit radio signals that can be received by other devices.

### SUMMARY

In one aspect, the present disclosure describes a method that includes training a machine learning network using, as input training data, a plurality of time series representing sampled radio frequency (RF) signals, and a plurality of labels. Each label is associated with at least one time series of the plurality of time series, and the labels describe one or more characteristics of emitters of the sampled RF signals. The machine learning network includes, for each label of the plurality of labels, a corresponding soft dynamic time warping (soft-DTW) terminal associated with the label. The soft-DTW terminals include weights, and a value of each soft-DTW terminal is based on a soft-DTW loss function based on the weights of the soft-DTW terminal. Training the machine learning network includes iteratively adjusting the weights of the soft-DTW terminals so as to reduce a value of at least one loss function; obtaining, as a result of the training, a machine learning model configured to classify new RF signal sequences by label; and providing the machine learning model to an RF sensing device.

Implementations of this and other disclosed methods can have any one or more of at least the following characteristics.

In some implementations, the at least one loss function whose value is reduced includes an additional loss function having a value that depends jointly on the values of the soft-DTW terminals.

In some implementations, the additional loss function includes a cross-entropy loss function.

In some implementations, iteratively adjusting the weights of the soft-DTW terminals includes adjusting the weights so as to, for each label of the plurality of labels, (i) reduce a value of a soft-DTW loss function corresponding to the label when the soft-DTW loss function is based on a time series of the plurality of time series that is associated with the label, and (ii) increase the value of the soft-DTW loss function corresponding to the label when the soft-DTW loss function is based on a time series of the plurality of time series that is not associated with the label.

In some implementations, for each soft-DTW terminal, the soft-DTW loss function of the soft-DTW terminal characterizes a difference between (i) a sequence of the weights of the soft-DTW terminal and (ii) one or more derived sequences obtained by processing time series of the plurality of time series.

In some implementations, the method includes upsampling the one or more derived sequences prior to characterization of the difference between the sequence of the weights and the one or more derived sequences.

In some implementations, the machine learning network includes a machine learning component including a plurality of additional weights. The machine learning component is configured to determine the one or more derived sequences based on the plurality of additional weights, and training the machine learning network includes adjusting the plurality of additional weights.

In some implementations, the machine learning component includes one of a multi-layer perceptron (MLP), a recurrent neural net (RNN), a convolutional neural net (CNN), or a transformer network.

In some implementations, the machine learning model includes, for each label of the plurality of labels, a corresponding barycenter.

In some implementations, for each label of the plurality of labels, the barycenter corresponding to the label includes weights of the soft-DTW terminal corresponding to the label.

In some implementations, the machine learning network includes a soft-DTW terminal corresponding to an open set of the input training data.

In some implementations, the method includes: providing, as input to the machine learning model, a detected RF signal; determining, as an output of the machine learning model, a sequence corresponding to the detected RF signal; and determining, based on the sequence, a mapping corresponding to a signal transform that acted on the detected RF signal.

In some implementations, the mapping includes an alignment matrix between the sequence and a barycenter. The barycenter corresponds to a label of the plurality of labels with which the detected RF signal is classified.

In some implementations, the method includes determining, based on the mapping, data characterizing an RF channel between an emitter of the detected RF signal and a sensing device that sensed the detected RF signal .

In some implementations, the method includes determining, based on the mapping, a transform-stripped version of the detected RF signal.

In some implementations, the method includes determining, as an output of the machine learning model, information characterizing an emitter of the detected RF signal.

In some implementations, the method includes determining, as an output of the machine learning model, an identity of an emitter of the detected RF signal.

In some implementations, the plurality of labels include a label indicating a pseudorandom noise (PRN) code associated with an emitter. The at least one time series associated with the label includes sampled RF signals received from the emitter.

In some implementations, the plurality of labels include a label indicating a maritime mobile service identity (MMSI) identifier associated with a nautical vessel. The at least one time series associated with the label includes sampled radar signals received from the nautical vessel.

In some implementations, providing the machine learning model to the RF sensing device includes transmitting the machine learning model from a ground station to the RF sensing device.

In some implementations, training the machine learning network includes iteratively adjusting the weights of the soft-DTW terminals simultaneously.

Another aspect of this disclosure describes another method. The method includes receiving, at a sensing device, a radio-frequency (RF) signal; inputting a sampled time series of the RF signal into a machine learning model trained using a soft dynamic time warping (soft-DTW) loss function; and determining, based on the machine learning model, an identity of an emitter of the RF signal.

Implementations of this and other methods can have any one or more of at least the following characteristics.

In some implementations, the method includes determining, based on the machine learning model, a mapping corresponding to a signal transform that acted on the RF signal; and determining, based on the mapping, data characterizing an RF channel between the emitter of the RF signal and the sensing device .

In some implementations, the signal transform includes at least one of a Doppler shift or a time shift.

In some implementations, the data characterizing the RF channel includes a location of the emitter.

In some implementations, the data characterizing the RF channel includes a probability that the emitter is located in a particular region.

In some implementations, the data characterizing the RF channel includes at least one of time-of-arrival data or frequency-of-arrival data of the RF signal received at the sensing device.

In some implementations, the mapping includes a mapping between (i) a sequence derived from the sampled time series of the RF signal and (ii) a barycenter corresponding to the identity of the emitter.

In some implementations, the mapping includes an alignment matrix.

In some implementations, the method includes determining, based on the mapping, a transform-stripped version of the RF signal.

In some implementations, determining the identity of the emitter includes determining the identity of one of a particular ship, a particular satellite, or a type of radar system.

In some implementations, the sensing device includes an aerial vehicle.

In some implementations, the aerial vehicle is one of a satellite or an aerial drone.

In some implementations, the machine learning model is stored on the sensing device, and inputting the sampled time series into the machine learning model and determining the identity are performed by a computing system on board the sensing device.

In some implementations, the machine learning model is trained using, as input training data, a plurality of time series representing sampled radio frequency (RF) signals, and a plurality of labels, each label associated with at least one time series of the plurality of time series, the labels describing one or more characteristics of emitters of the sampled RF signals.

In some implementations, the machine learning model includes a sequence representing a barycenter corresponding to the identity of the emitter.

In some implementations, these and other methods can be implemented using non-transitory, computer-readable media storing instructions that, when executed by one or more processors, cause the one or more processors to perform the methods.

In some implementations, these and other methods can be implemented using systems that include one or more computers; and one or more storage devices storing instructions that, when executed by the one or more computers, cause the one or more computers to perform the method.

In some implementations, the systems and techniques described herein are used to analyze received radio signals, and/or to construct machine learning models that are useful in analyzing received radio signals. The machine learning models employ a soft-dynamic time warping (soft-DTW) loss function, which is differentiable and suitable for use in training machine learning networks. The signal analyses, which can provide information about emitters of the signals and about Doppler effects on the signals, can be less computationally intensive than alternative methods such as Cross Ambiguity Function (CAF) processing, reducing consumption of computer resources and power resources. In some cases, the signal analyses can be performed on signals sensed at a single sensing device, as opposed to alternative methods that require multiple sensing devices for emitter identification/geolocation.

The details of one or more implementations are set forth in the accompanying drawings and the description below. Other aspects, features and advantages will be apparent from the description and drawings, and from the claims.

### BRIEF DESCRIPTION OF THE DRAWINGS

FIG. 1 is a diagram illustrating an example system of emitters and sensing devices.
FIG. 2 is a diagram illustrating example training of a machine learning network.
FIG. 3 is a diagram illustrating an example machine learning network.
FIG. 4 is a diagram illustrating processing by an example machine learning model.
FIG. 5A is a diagram illustrating an example of determining an alignment matrix.
FIG. 5B is a diagram illustrating an example alignment matrix.
FIG. 6A is a diagram illustrating example training of a machine learning network.
FIG. 6B is a diagram illustrating processing by an example machine learning model.
FIG. 7 is a diagram illustrating an example sensing device.
FIG. 8 is a diagram illustrating an example ground station.
FIG. 9 is a diagram illustrating an example training method.
FIG. 10 is a diagram illustrating an example signal analysis method.

### DETAILED DESCRIPTION

This disclosure relates to signal processing of Doppler-shifted and time-shifted signals, and in particular to signal processing of Doppler-shifted and time-shifted radio-frequency signals received at mobile sensing devices such as satellites, aerial drones, or other aerial vehicles. Recovery of original, un-shifted radio signals from Doppler-shifted and time-shifted radio signals, and identification/geolocation of emitters that transmitted the radio signals, typically involve computationally-demanding processes that, in some cases, require receiving the signals at multiple sensing devices at different locations and/or different times. This disclosure describes methods and systems that can recover transform-stripped signals (e.g., Doppler shift-stripped and time shift-stripped signals), identify signal emitters, and geolocate emitters (processes that can be collectively referred to as "temporal rectification") using less computationally-demanding processing. In some implementations, the methods and systems are applicable to signals received at a plurality of sensing devices. In some implementations, the methods and systems are applicable to signals received at a single sensing device.

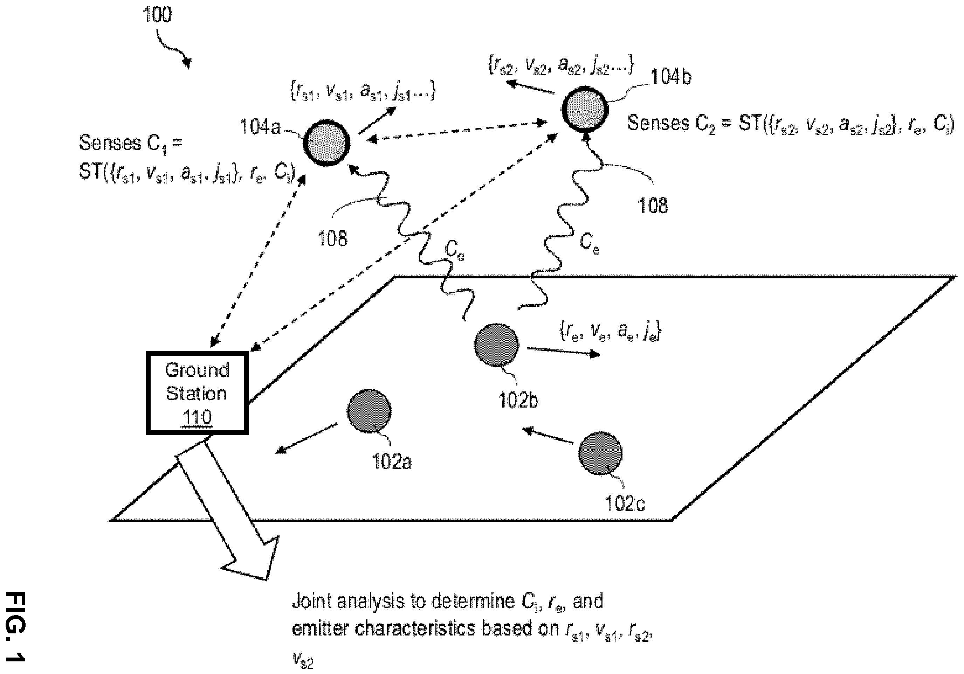

As shown in FIG. 1, a system 100 in an environment includes a plurality of signal emitters, such as signal emitters 102a, 102b, and 102c (collectively referred to as signal emitters 102); and a plurality of sensing devices, such as sensing devices 104a and 104b (collectively referred to as sensing devices 104). Signal emitter 102b emits radio-frequency (RF) signals 108.

The signal emitters 102 are sources of RF signals. In some implementations, the one or more of the signal emitters 102a, 102b, and 102c are ships, ground vehicles, planes, satellites, satellite telephones, cellular towers, cellular phones, emergency safety beacons, television broadcast towers, radar stations/sensors, other transmission/sensing stations, or other sources of radio-frequency (RF) signals. Each emitter 102 has a set of trajectory parameters. For example, emitter 102b has position *r*ₑ, velocity *v*ₑ, acceleration *a*ₑ, and jerk *j*ₑ. Trajectory parameters in some implementations can include higher derivatives of motion such as snap, but such higher-derivative terms may not impact signal sensing, processing, or geolocation applications substantially. Position can be expressed in a global coordinate system, e.g., World Geodetic System (WGS 84) or in a local coordinate system that maps a particular region/area of the Earth's surface. Similarly, velocity, acceleration, and higher-order trajectory parameters of the emitters can be expressed with respect to local rotation of the Earth or can be expressed with respect to a global reference frame.

Emitter 102b emits RF signals 108 (*C*ₑ). These RF signals 108 are detected using the sensing devices 104a and 104b. In some implementations, the sensing devices 104 are mobile apparatuses, such as spacecraft, aerial vehicles, terrestrial vehicles, or another suitable mobile platform. For example, in some implementations the sensing devices 104 are satellites. Alternatively, or in addition, the sensing devices 104 can be cars or trucks. Alternatively, or in addition, the sensing devices 104 can be aerial vehicles such as airplanes, or unmanned aerial vehicles (UAVs) such as drones or balloons. Alternatively, or in addition, the sensing devices 104 can be boats or ships that travel on water (e.g., on the oceans). In some implementations, the sensing device 104a is a first type of mobile platform, while the sensing device 104b is a second type of mobile platform that is different from the first type of mobile platform.

In this example, the sensing devices 104a and104b are mobile and move with respective trajectories. Depending on the type(s) of the sensing devices 104, the trajectories can be in space, in atmosphere, or on the terrestrial surface. When the sensing devices 104 are satellites or other space vehicles, the trajectories can be orbital trajectories with respect to the Earth's surface. When the sensing devices 104 are terrestrial vehicles, the trajectories are ground trajectories, e.g., on marked roads or in unmarked areas. The trajectories can be characterized by respective trajectory parameters *r*ₛ₁, *v*ₛ₁, *a*ₛ₁, jₛ₁ and *r*ₛ₂, *v*ₛ₂, *a*ₛ₂, *j*ₛ₂. These parameters can be defined in various coordinate systems/reference frames depending on the type(s) of the sensing devices 104. For example, trajectory parameters of satellites can be expressed in an Earth-centered inertial (ECI) reference frame.

Sensing of the RF signals 108 can be used for various purposes. In some implementations, the sensing is used to identify and geolocate "dark" entities such as dark ships, meaning maritime vessels that are not broadcasting their positions/identities using the automatic identification system (AIS). Dark ships are often involved in smuggling (e.g., sanctions violations), illegal fishing, and other illicit activities, such that identifying and tracking them is useful for information-gathering and enforcement purposes. This process is sometimes referred to as "unidentified signal recognition" (USR). USR can instead or additionally be performed for other emitter types, such as satellites, ground vehicles, and transiently-emitting terrestrial entities like radar stations. Despite not broadcasting their identities and locations over traditional channels (e.g., AIS), dark entities often do broadcast other types of detectable signals. For example, dark ships use maritime radar for navigation, and the maritime radar signals can be detected at sensing devices such as satellites.

The sensing devices 104 do not directly receive the emitted RF signal 108 (*C*ₑ). Rather, the sensing devices 104 receive respective transformed signals C₁=ST({*r*ₛ₁, *v*ₛ₁, *a*ₛ₁, *j*ₛ₁},rₑ, *C*ₑ) and C₂ = ST({*r*ₛ₂, *v*ₛ₂, *a*ₛ₂, *j*ₛ₂}, *rₑ, C*ₑ), which represent the original signal *C*ₑ modified by the RF channel between the signal emitter 102b and sensing devices 104 (including the effects of relative motion). For example, in an example of time shifting, a sensing device 104 that is closer to the emitter 102b will receive the signal before a sensing device 104 that is further from the emitter 102b. As another example, Doppler transformation can modify the perceived frequency of a signal or, for a time-sampled received signal, modify relative times at which sampled values of the signal (e.g., intensities and signal peaks) are detected at respective sensing devices 104a and 104b (e.g., the as-received signal will appear compressed or elongated). Implementations according to this disclosure can relate to all of or subsets of the combined effects of the RF channel between the signal emitter and sensing devices, including those resulting from relative motion between the emitter and sensing devices (e.g., Doppler shifting and time shifting). The subset of channel effects considered by temporal rectification processing are denoted in the above equation by transformation ST and are collectively referred to herein as "signal transformation." Signal transformation in some implementations does not include effects such as free-space path loss and multipath frequency selective fading. In some implementations, these and other effects that are not included in signal transformation can be accounted for by other portions of the analysis process. For example, the machine learning component 302 (described in further detail below) can generate *D* such that free-space path loss, multipath frequency selective fading, and/or other channel effects are accounted for (e.g., have their effect reduced in *D* compared to in C).

Inversion of the signal transformation can be performed to recover a signal *C*ₑ' that represents the received signal *C*ᵢ with effects of the signal transformation removed, e.g., that represents the transmitted signal *C*ₑ acted on by any other channel effects not included in the signal transformation function ST. In the description below, unless otherwise stated, these other channel effects are ignored, and signal recovery is described as recovering the "as-emitted" or "transform-stripped" signal *C*ₑ. This recovery process, along with determination of other data related to the emitter (e.g., performing USR and geolocating the emitter 102), can be referred to as "temporal rectification." It is known that computationally intensive processing such as cross-ambiguity function (CAF) processing can be applied based on signals received at two or more sensing devices or on signals received at one sensing device and compared to a matched filter. CAF processing seeks to cross-correlate arbitrary received signals based on propagation delay and Doppler shifts of the signals (or, with increased complexity, transforms related to higher derivatives of relative motion). A peak in the CAF corresponds to maximum cross-correlation between received signals and, accordingly, to a time-difference-of-arrival (TDOA) and frequency-difference-of-arrival (FDOA) between sensing devices. Given this information, one can recover (to within some degree of precision) both the as-emitted signal and the location of the emitter. The transform-stripped signal can include elements/signatures that indicate a type/identity of the emitter, for USR and other purposes. For example, a string of digits modulated onto a digital radio signal can be an identifier of the emitter. These elements/signatures may also be present in transformed signals; however, in some implementations, the elements/signatures are more evident in transform-stripped signals (e.g., are less distorted and/or conform more closely to established standards), such that analysis of the transform-stripped signals can be more accurate and/or reliable than analysis of transformed signals.

However, there can be drawbacks to a reliance on CAF processing. First, CAF processing tends to be computationally intensive. For processing systems with limited processing resources, such as systems typically included in sensing devices such as satellites, this implies a long processing time or an inability to use those processing resources to perform other tasks while dedicating them to CAF processing. Processing results may be out-of-date or otherwise less useful when they are finally obtained. The computationally intensive processing may instead or additionally be associated with high power consumption which can strain the sometimes-limited power resources of sensing devices. Alternatively, received signals can be provided to a system with more powerful processing capabilities (such as a ground station 110), but this (i) can itself lead to slower processing times due to transmission to the ground station and associated processing, (ii) is associated with additional power consumption from transmission of the signals from the sensing device to the ground station, and (iii) requires the availability of a ground station positioned to receive signals from the sensing devices. Second, when a matched filter is not known, CAF processing relies on multiple sensing devices, for example, a satellite cluster. This adds significant cost and complexity to the detection system. Third, CAF processing generally takes into account position and velocity of emitters and sensing devices, but neglects higher-order terms such as acceleration and jerk. CAF processing taking into account higher-order terms requires exponentially more processing resources, compounding the processing burden noted above. Neglecting to account for higher-order terms can provide acceptable results for ground-based systems and certain other systems but may fail for systems (which can include emitters, sensing devices, or both) that have high accelerations and jerks, and/or for high-precision estimates such as those desired for precise geolocation. This disclosure describes systems and methods that can, in some implementations, alleviate some or all of these drawbacks, allowing for computationally efficient transform-stripped signal recovery, emitter identification, and emitter geolocation based on signals received at one or multiple sensing devices.

### Training

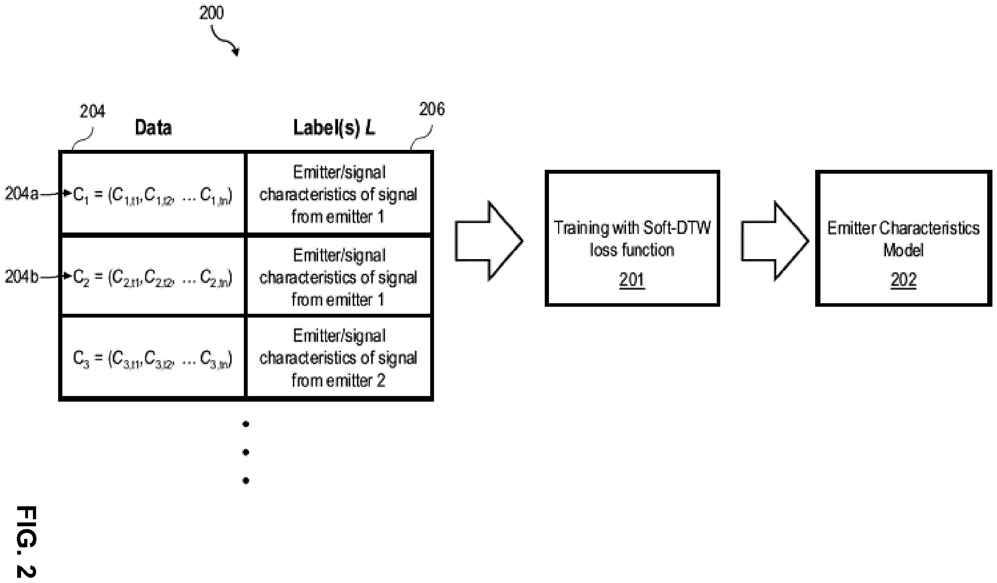

As shown in FIG. 2, labeled data 200 is used to train (201) a machine learning network into an Emitter Characteristics Model (ECM) 202 that can classify input data by label (predict one or more labels corresponding to the input data). The training of the ECM makes use of soft dynamic time warping (soft-DTW), and the ECM can subsequently be applied in an inference process (described in further detail below) to recover transform-stripped signal data and signal transformation data indicative of sensing device trajectory parameters relative to the emitter.

The training data 204 used to train the ECM 202 includes sequences of time-sampled signals (e.g., RF signals) as received at sensing devices, such as the sensing devices described above. For example, the training data 204 can include GPS signal sequences that include 2MHz sampled data representing 1ms of collection downconverted from a nominal L1 GPS center frequency. The training data 204 can include 10MHz sampled data of radar pulses, downconverted from a maritime radar band. The sequences are finite continuously sampled segments that, in some implementations, are taken from longer or more rapidly sampled sequences of RF data collection (e.g., regularly sampled I/Q data encoded as a series of complex numbers). In some implementations, the sequences making up the training data are detected within longer or more rapidly sampled sequences by finding time- and/or frequency-bounded subsets of the collection with increased signal intensity/power values above the noise floor. As shown in FIG. 2, a training data sequence *C*ᵢ is denoted (*C*_{i,t1}, *C*_{i,t2},... *C*_{i,tn} ), where *t*ₙ for different sequences *C* need not be the same. In general, each training data sequence *C*ᵢ will not be of the same length, in which case shorter sequences can be zero-padded or padded with sequences of sample data consistent with background noise characteristic of the sensing device at which the training data sequence *C*ᵢ was received, and/or longer sequences can be truncated. Alternatively, in some implementations, different-length sequences can be used without length alteration for training.

Labels 206 (in a set of labels *L*) corresponding to each sequence of training data 204 can include various types of data. In some implementations, the labels 206 characterize a type of the emitter that emitted the signal represented in the training data 204 (e.g., the make or model of the device emitting the signal). These labels are obtained from previously-performed processing of the training data 204, including, in some cases, CAF processing and/or geolocation processing. In some implementations, labels for training sequences may be known because the data is collected under controlled circumstances such as in a laboratory or other testing facility. In the example of FIG. 2, training data sequences 204a, 204b were received, respectively, at two different sensing devices from the same emitter, and CAF processing was performed to recover a transform-stripped version of the training data sequences 204a, 204b and/or to geolocate the emitter and thereby determine the emitter's identity using other information relating that identity to the emitter's positions at different times. For another example, the transform-stripped signal can include an encoded sequence that indicates an identity of the emitter, such as a Gold code. In the case of GPS signal sequences, PRN code sequences indicate an identity of the emitting satellite. PRN codes generally are each associated with a distinct emitter in a code division multiple access (CDMA) network, such as that corresponding to satellites. Each PRN code sequence in the training corpus (or, equivalently, an indicator of the identity of the satellite corresponding to each PRN code sequence) is a label. In the case of radar signal sequences, geolocation (e.g., TDOA/FDOA analysis using multiple sensing devices) is used to determine a geographic location of the emitter, and the determined location is correlated with a maritime mobile service identity (MMSI) identifier from an AIS message emitted in proximity (in space and time) to the determined location. The MMSI identifier corresponds to a ship that emitted both the AIS message and the radar signal. Accordingly, the label for the radar signal sequence in the training data 204 can be the MMSI identifier or another identifier of the ship.

Labels can instead or additionally identify classes of emitters, such as models/types of radar systems, models/types of satellites, models/types of RF signal transceivers, models/types of other types of device(s), and/or other data. Labels can instead or additionally qualitatively describe the training data sequences themselves, such as a type of RF signal (e.g., radar signal, satellite telephone signal, GPS signal, cellular signal, among others), type(s) of encoding, encryption and/or compression applied to the signal, and/or elements in the signal besides the emitter identifiers noted above.

In some implementations, an "open set" of training data (e.g., training data not corresponding to any of the labels *L*) is included with a corresponding open set soft-DTW terminal. The open set is included to account for lack of representation of one or more labeled classes in the training set. For example, some MMSIs may be unrepresented or underrepresented among the labels in the training set, e.g., if the MMSI corresponds to a new ship from which no radar signals have been received. Absent an open set terminal in the ECM 202, classification of signals corresponding to labels for which the ECM 202 has not been trained may be incorrect and lead to poor temporal rectification results. Using the open set, the ECM 202 is trained to identify input signals that do not correspond to any of the labels provided during training. These input signals, when identified, can be discarded or passed to an alternative processing module.

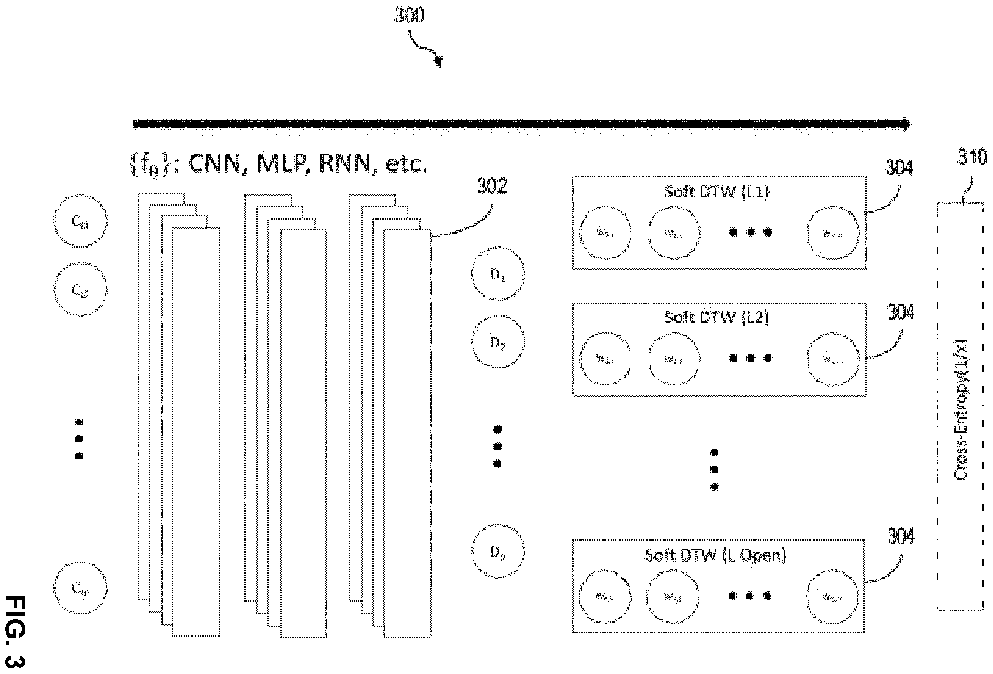

Given this set of training data 204 and corresponding labels 206, as shown in FIG. 3, a machine learning network 300 is trained to classify new input data by labels in the set of labels *L* included in the labeled data 200. As shown in FIG. 3, the machine learning network 300 includes a machine learning component 302 ({*f*_{θ}}), representing a family of functions parametrized by weights and hyperparameters (θ). The machine learning component 302 can have various forms depending on the implementation, such as a multi-layer perceptron (MLP), a recurrent neural net (RNN), a convolutional neural net (CNN), or a transformer network. The machine learning component 302 is connected to the rest of the machine learning network 300 by backpropagation, meaning, for example, that weights and hyperparameters of the machine learning component 302 are adjusted based, e.g., on gradient descent relative to a loss function computed in another portion of the machine learning network 300. The machine learning component 302 is configured to receive, as input, time series data (training data 204), here shown as *C* = {*C*ₜ₁, *C*ₜ₂, ... , *C*ₜₙ}, and to output a sequence *D* = {*D*₁, *D*₂, ... , *D*ₚ}. The output sequence *D* represents a cleaned version of the input sequence *C* that is more useful for subsequent soft-DTW-based processing. For example, *D* may have less noise than *C* (e.g., represent a noise-filtered version of *C*)*,* or may be smoothed compared to *C*. As another example, in some implementations the machine learning component 302 learns to output *D* such that channel effects separate from Doppler-shifting and time-shifting (e.g., free space path loss and/or multipath interference) are reduced/stripped compared to C. In general, in *D* compared to *C*, characteristics of *C* that are more relevant to soft-DTW loss function minimization are emphasized, and characteristics of C that are less relevant to soft-DTW loss function minimization are deemphasized or eliminated. *D* can be real- or complex-valued, and in some implementations *p ≠ n,* though typically (but not always) *p ≈ n.*

For each of at least some labels *L*ᵢ *in L* (e.g., for each label in *L*), a corresponding soft-DTW terminal 304 is included in the network and associated with a soft-DTW loss function. The soft-DTW terminals 304 each include a set of weights *W*ᵢ = (*W*_{i,1}, *W*_{i,2},... *, W*_{i,m}) based on which values of the soft-DTW loss functions of the soft-DTW terminals 304 are calculated.

These weights can be initialized randomly or can be set to targeted values (e.g., a matched filter for a particular GPS PRN sequence that corresponds to a label or a barycenter pre-calculated based on output sequences D corresponding to label *Lᵢ*), and in some cases *m ≠ p* and/or *m ≠ n.* In some implementations, *m > n*. In some implementations (e.g., when *m > n*)*, D* is upsampled prior to use in a soft-DTW terminal in order for processes involving soft-DTW to work with higher resolution, which can improve weight determination and signal analysis based on the weights. The use of an appropriate matched filter as a starting point for training can speed up the training process and/or reduce the occurrence of the network 300 converging to undesirable local minima during training. Over many iterations of altering the weights and hyperparameters of the machine learning component 302 and the weights W of the soft-DTW terminals 304, the machine learning network 300 evolves to reduce (e.g., reduce compared to an initial value, minimize absolutely, and/or minimize subject to one or more other constraints) a k-state cross-entropy loss function 310 that depends on values of soft-DTW loss functions of the soft-DTW terminals 304, where k is the number of soft-DTW terminals 304.

Other suitable loss functions are also within the scope of this disclosure. For example, a loss functions that depends on fewer than all of the soft-DTW loss functions of the soft-DTW terminals 304 can be used. In some implementations, the weights of at least some of the soft-DTW terminals 304 are trained separately from other weights, without being associated with a shared loss function such as the cross-entropy loss function 310.

In the example of FIG. 3, for each label *L*ᵢ, the set of weights *W*ᵢ evolves to approximate a barycenter for output sequences *D* corresponding to the label *Lᵢ* that (i) reduces (e.g., minimizes) the soft-DTW loss function for output sequences *D* corresponding to the label *L*ᵢ, and (ii) increases (e.g., maximizes) the soft-DTW loss function for output sequences *D* corresponding to other labels in *L.* In some implementations, this is different from optimizing only for in-label comparisons. For example, in the absence of simultaneous training, a determined barycenter *W* for a label *L* may minimize the value of the loss function corresponding to *L,* but this *W* may not perform well at separating its soft-DTW terminal from other soft-DTW terminals (e.g., at determining which *D* sequence characteristics most indicate an association with *L* compared to other labels). Simultaneous terminal training can allow for more accurate classification (e.g., emitter identification for USR) across the range of emitters corresponding to different *L*.

In some implementations, during a forward pass within a training iteration, each sequence *D* output by the machine learning component 302 is input to each soft-DTW terminal 304 and compared to weights W in each terminal using the soft-DTW loss function. In other implementations, a drop-out procedure is used so that for any sequence *D,* there is some probability for each index *i* that the sequence *D* is not input to the soft-DTW terminal corresponding to label *Lᵢ*. In some implementations, a single training iteration can use only a strict subset of the possible labels plus the "open set". In the extreme case where the strict subset contains only a single label, the resulting cross-entropy loss function is a binary cross-entropy loss function, and the soft-DTW terminals 304 are trained non-simultaneously. Training for the machine learning network 300 may progress according to different schedules where any iteration may proceed according to any of the general descriptions above (e.g., the iteration may involve all labels, selective dropout, a strict subset of the possible labels together with or without the open set, or a single label together with the open set). The following iteration may proceed according to a description different from the former iteration.

This accurate classification is aided, in some implementations, by the inclusion of the finite set of soft-DTW terminals corresponding to the different labels. In the case of USR and similar tasks, there exists a finite set of classes into which unknown signals/sequences can be classified. Accordingly, the set of soft-DTW terminals represents a machine learning network configuration tuned for the specific application of signal classification.

In the example of FIG. 3, the simultaneous optimization is provided by the k-state cross-entropy loss function 310, the value of which during each training iteration is based on values of the soft-DTW loss functions of the soft-DTW terminals 304. In this example, the *k*-state cross-entropy loss function 310 is preceded by multiplicative inversion (1/*x*) to translate minimization against soft-DTW outputs into maximization against a maximization input used by the *k*-state cross-entropy loss function 310.

As noted above, in some implementations, value(s) of each soft-DTW terminal during training are based on soft-DTW(*W*, *D*)*.* Because *D* are determined based on weights and hyperparameters of the machine learning component 302, training based on the soft-DTW terminals 304 can simultaneously train not only the weights W of the soft-DTW terminals 304 but also the weights and hyperparameters of the machine learning component 302, for a cohesive and effective overall learning process that improves both *D* determination and barycenter determination.

A brief overview of soft-DTW is now provided; further details can be found in Cuturi and Blondel, Soft-DTW: a Differentiable Loss Function for Time-Series, available at https://arxiv.org/abs/1703.01541. Soft-DTW is a modification of standard DTW, which defines a loss function between two sequences *X* and *Y,* for example, to determine how well *X* matches *Y* up to certain, time-related transformations on one or both sequences. Such a loss function has applications in, for example, sequence prediction: to determine how well a prediction function *f* predicts an end portion *X* of a sequence (given a beginning portion of the sequence) compared to the actual end portion Y of the sequence, one must define a loss function between *X* and *Y.* There are many possible loss functions (e.g., Euclidean distance), of which the DTW loss function is one. DTW defines a matrix transformation *A* between *X* and *Y,* in which *A* is a matrix having 0s everywhere, except that *A* has 1s in a path through *A* from top-left (*x*₁, *y*₁) to bottom-right (*x*ₙ, *y*ₚ), where *X* is a sequence of length *n and Y* is a sequence of length *p.* The path through *A* is continuous and monotonic: for each 1 in *A,* the next 1 must be right, down, or down-right compared to the previous 1. *A* is the matrix for which the inner product of *A* and the pairwise distance matrix of *X* and *Y* is minimized, where this inner product is the "DTW loss function." *A* is sometimes referred to as an "alignment matrix" because it represents a mapping (alignment) between elements of *X* and elements of *Y* that preserves the order of the elements within *X* and *Y,* thereby "warping" *X* and *Y* while preserving their internal structures.

Although DTW is useful, the DTW loss function is non-differentiable. Intuitively, this can be understood as resulting from the sudden, discontinuous changes in the DTW loss function that result from changes *in A* as *X* and *Y* are varied. The gradient of the DTW loss function accordingly exhibits "jumps" during optimization/learning processes, such that the DTW loss function is problematic to use in optimization/learning processes such as gradient-based optimization. Soft-DTW modifies DTW to use a "soft minimum," a smooth, differentiable approximation of the *min* function. This change results in the soft-DTW loss function being differentiable. In some implementations, a differentiable loss function is more suitable than non-differentiable loss functions for use in gradient-based processes such as some implementations of the machine learning network 300.

Referring back to FIG. 3, as described above, the weights *W*ᵢ = (*W*_{i,1}*, W*_{*i*,2},... *, W*_{i,m}) for each label *L*ᵢ are adjusted such that *W*ᵢ approximates a barycenter of a set {*D*ᵢ} = *f*_{θ}(*C*ᵢ), where *C*ᵢ is the set of input sequences having label *L*ᵢ, such that *W*ᵢ can be referred to as a barycenter of the set {*D*ᵢ} or a barycenter corresponding to *L*ᵢ. In some implementations, by use of a loss function based on multiple different barycenters *W*ᵢ corresponding to multiple different labels *L*ᵢ (such as the *k*-state cross-entropy loss function 310), the barycenters *W*ᵢ are trained simultaneously to incentivize separation between input classes (labels) for the purposes of classification via cross-entropy. As described above, the barycenters *W*ᵢ for each *L*ᵢ evolve to (i) reduce (e.g., minimize) the soft-DTW loss function for output sequences *D* corresponding to the label *L*ᵢ, and (ii) increase (e.g., maximize) the soft-DTW loss function for output sequences *D* corresponding to other labels in *L.*

Each *C*ᵢ (and, correspondingly, *D*ᵢ) is based on a signal that shares characteristics with the signals on which the other *C*ᵢ/*D*ᵢ corresponding to the same label *L*ᵢ are based (e.g., the signals include a matching code sequence, encoding characteristic, signal shape, and/or other characteristic), but the *C*ᵢ/*D*ᵢ themselves have been warped in different ways due to signal transformation ST and other channel effects. *W*ᵢ, accordingly, approximates (up to different dynamic time warping transformations) the sequences with label *L*ᵢ in total (as a group). That is, *W*ᵢ approximates a representative sequence corresponding to label *L*ᵢ of the set of transform-stripped versions of sequences *Dᵢ* (e.g., versions of *Dᵢ* before Doppler shifting and time-shifting), modified by applying a fixed signal transformation *STᵢ*. Accordingly, for example, when *L*ᵢ corresponds to a PRN code sequence, *W*ᵢ can approximate a group of GPS signals as emitted by a satellite corresponding to that PRN code sequence. When *L*ᵢ corresponds to an MMSI identifier, *W*ᵢ can approximate the radar emissions of a ship having that MMSI identifier.

### Inference

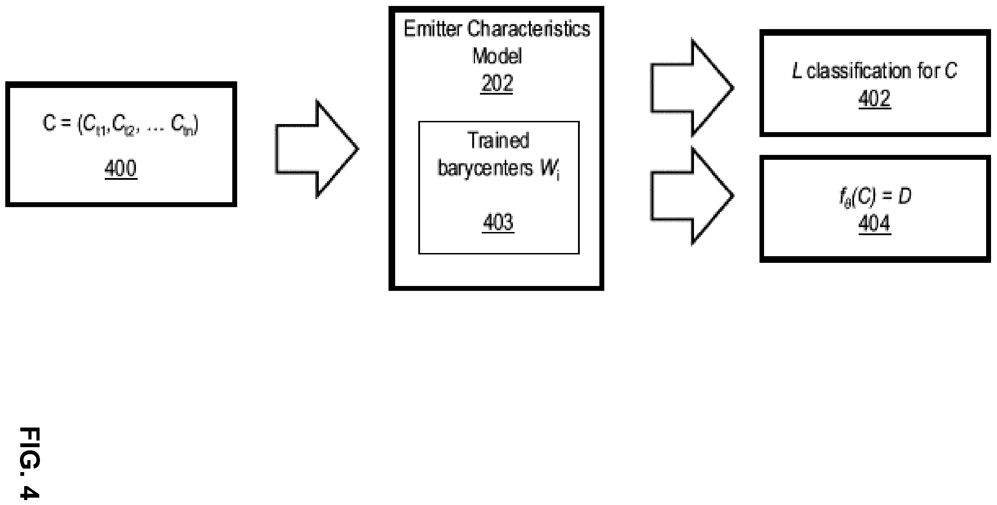

As shown in FIG. 4, at the conclusion of training, a trained ECM 202 is configured to classify a new input sequence *C* (400) by label *L* (402), and, in some implementations, to output *f*_{θ}(*C*) = *D* (404). The trained ECM 202 includes the trained barycenters *W*ᵢ 403 that allow for determination of alignments, as described in further detail below*. C* can be a signal detected at a sensing device, for example, from an unknown source and having unknown characteristics. The ECM 202 allows determination of emitter characteristics and, in some implementations, approximate transform-stripping of *C* and determination of an alignment between *C* and transform-stripped (as-transmitted) *C*. The alignment carries information about Doppler transformation, TDOA, and FDOA, which can, for example, allow for determination of a position of the emitter.

Training of the ECM 202 is typically computationally intensive and, accordingly, is often performed by a computing system with significant resources, such as a computing system of the ground station 110. By contrast, using the trained ECM 202 for inference is less computationally intensive, such that analysis operations can be performed by a computing system of a sensing device, such as a computing system of a satellite or drone. Using the trained ECM 202 for inference may also be less computationally intensive than other means of processing (such as by using CAF processing) to obtain approximately similar results. Using the trained ECM 202 for inference may be performed by a computing system of a sensing device, such as a computing system of a satellite or drone, whereas other means of processing to obtain approximately similar results may be feasible only when performed by a computing system with significant resources, such as a computing system of the ground station 110. Accordingly, processing results can be obtained more quickly than if signal processing is performed at a ground station, because it is not necessary to transmit the received signal to a ground station for processing. These processing results can be used to determine subsequent operations of the sensing device, such as to monitor a particular frequency band or to monitor signals from a particular location/region. Also, transmission bandwidth can be saved by not transmitting the received signal to a ground station, and/or by transmitting the received signal after performing the analysis, at a time when transmission can be carried out more efficiently.

Classification is, by itself, useful. For example, depending on the type of the label *L,* the classification can identify a particular emitter that emitted C (a particular ship, satellite, or ground radar station), a particular type of emitter that emitted C (e.g., a class of ship, class/cluster of satellites, or model of radar emitter), or another type of data. For example, information that can be determined about a received signal can include a spreading code of the signal, (e.g., a gold code PRN sequence for signals from GPS satellites), a modulation type of the signal, network membership of the signal, radio parts manufacturer of a radio device emitting the signal, a forward channel correction coding/channel coding protocol to which the signal conforms, content of a message carried by the signal, pulse shaping characteristics of the signal, or link utilization of a signal.

The output sequence *f*_{θ}(*C*) (i.e., *D*) is also useful. Specifically, if C is classified with label *L*ᵢ, then *f*_{θ}(*C*) is similar to *W*ᵢ (the barycenter of {*D*ᵢ}) up to a time-warping operation. Because *W*ᵢ approximates a group of as-emitted (transform-stripped) signals having label *L*ᵢ up to a fixed transformation *STᵢ*, an alignment matrix *A* between *f*_{θ}(*C*) and *W*ᵢ is indicative of transforms (e.g., Doppler transforms) that acted on an as-emitted signal to generate the as-received signal C.

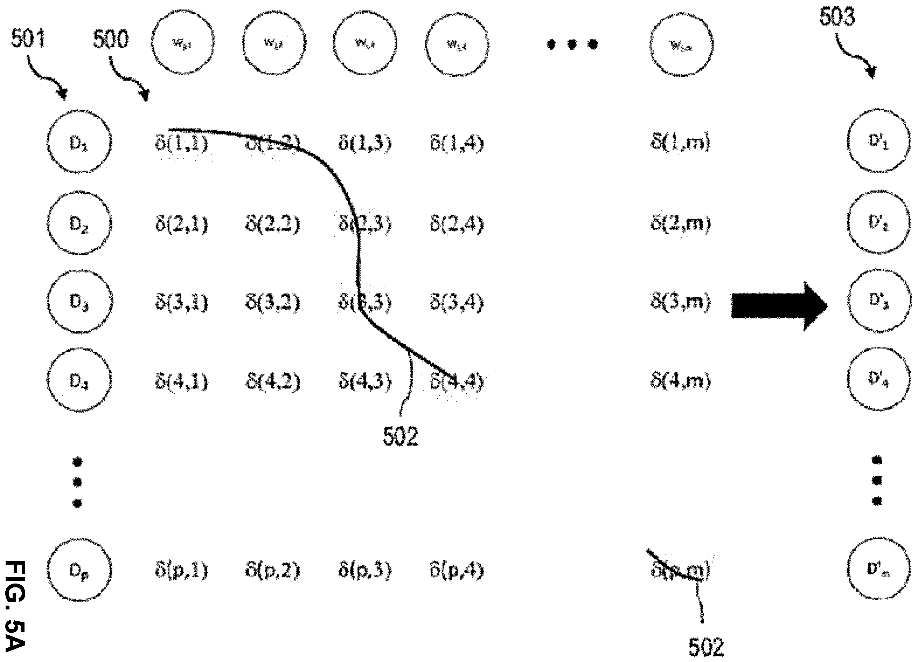

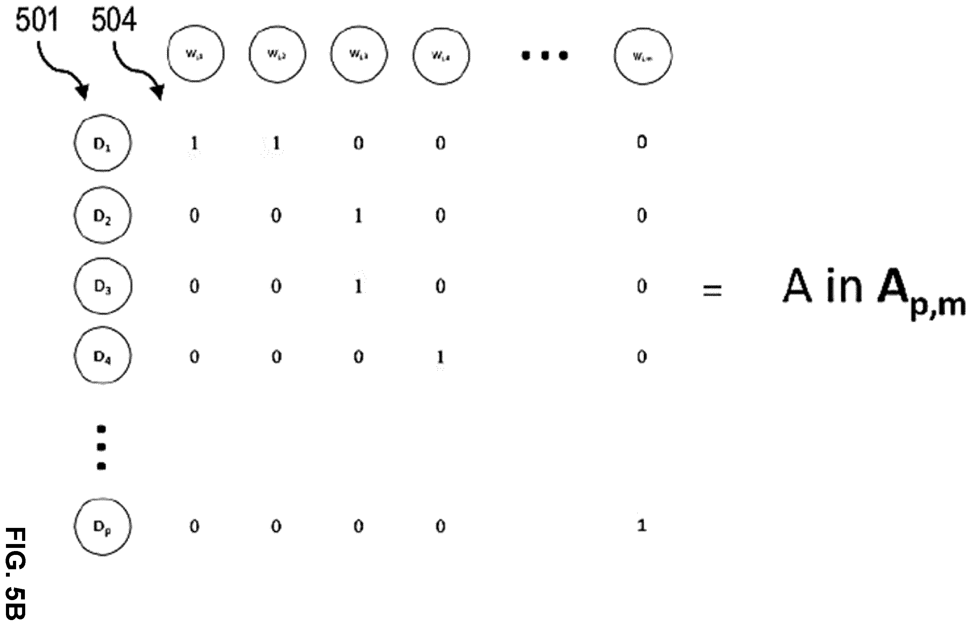

As shown in FIGS. 5A-5B, a DTW algorithm (which need not be a soft-DTW algorithm) is used to construct the alignment matrix A. In some implementations, a pairwise distance matrix 500, Δ, is determined between *D* 501 (*f*_{θ}(*C*)) and *W*ᵢ. Δ_{q,j} = *δ*(*D*_{q}, *W*_{i,j}) for 1 ≤ *q* ≤ *p* and 1 ≤ *j* ≤ *m,* where δ is the Euclidean distance. As described above, a path 502 is determined through the distance matrix 500 from Δ_{1,1} to Δ_{p,m}; the path 502 minimizes a sum of the δ(*D*_{q}, *W*_{i,j}) along the path 502. The alignment matrix A 504 has value 1 along the path 502 and 0 elsewhere, as shown in FIG. 5B Accordingly, an alignment-resampled version of *D* 501, *D'* = (*D*₁', *D*₂', ... , *D*ₘ') 503 is determined by populating the *j^{th}* entry of *D'* 503 with *D*_{q}, where *q* is the maximal row index among nonzero entries in column *j* of *A* 504*.*

### Deriving Temporally-Rectified Signals

*W*ᵢ approximates a group of as-emitted (transform-stripped) signals having label *L*ᵢ up to a fixed transformation *STᵢ. D',* accordingly, is an analogue for a transform-stripped version of C (e.g., is a transform-stripped version of *C*, modified by a fixed signal transform *STᵢ,* excepting any differences between C and *D* associated with determination of *D* by the machine learning model), such that *D'* can be used in subsequent analysis processes to determine information about C. Accordingly, in some implementations, *D*' is analyzed to determine information about C, for example, to perform USR for C based on an identifier included in *D',* to determine a type of encoding/encryption used when transmitting *C* based on as evinced in *D',* to perform a decryption operation on *D'* to obtain information about a decrypted version of *C*, to determine, for *C* and based on information in *D*', any one or more of the classification characteristics described above in association with the label *L*, and/or for other analysis operations. Because signal transformation information such as TDOA and FDOA information have been stripped from *D'* up to modification by a fixed signal transformation *STᵢ,* these and other analysis processes for which signal transformation information is irrelevant (e.g., which do not depend on knowing TDOA and FDOA information) can be more accurate than similar analyses of *D.*

The alignment matrix A also carries significant information and can be analyzed accordingly. Because *A* transforms *D* into *D'* (e.g., transforms *D* into a transform-stripped sequence modified by fixed signal transformation *STᵢ*), *A* carries information about the Doppler-shifting and time-shifting that acted on the emitted signal received as *C*. For example, *A* can be indicative of a series of time offsets corresponding to time compression ("bunching up") of time points, based on which it can be concluded that the emitter was moving towards the sensing device when emitting the signal received as C. Alternatively, A can be indicative of a series of time offsets corresponding to time-extension ("stretching out") of time points, based on which it can be concluded that the emitter was moving away from the sensing device when emitting the signal received as *C*.

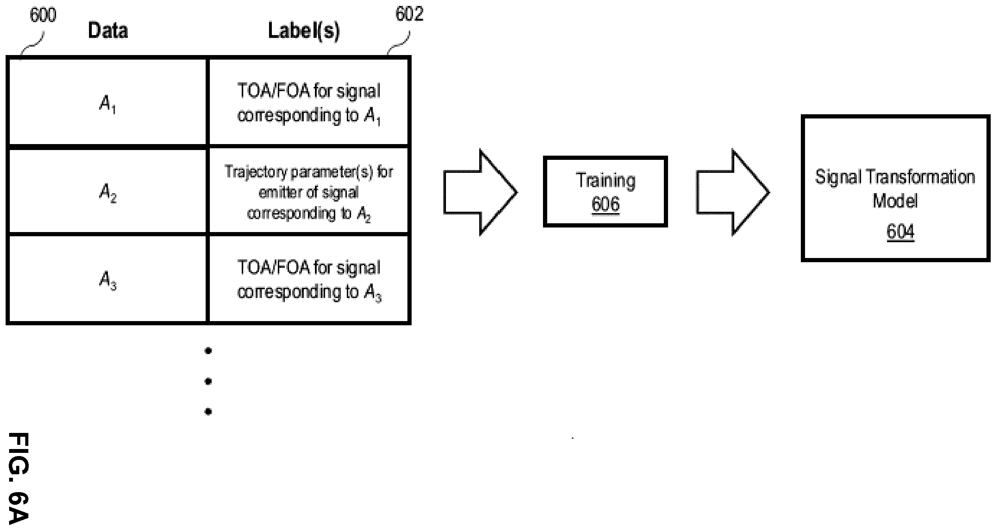

To obtain this and other transform-related information based on A, in some implementations, one or more machine learning models, which can be (but need not be) distinct from the ECM 202, are trained to analyze alignment matrices A to estimate trajectory parameters of emitters, such as position *r*ₑ, velocity *v*ₑ, acceleration *a*ₑ, and/or jerk *j*ₑ of emitter 102b of FIG. 1 (e.g., in reference to a sensing device), and/or trajectory parameters of sensing devices (e.g., in reference to an emitter). As shown in FIG. 6A, training data 600 includes alignment matrices A. At least some of the alignment matrices in the training data 600 can be derived from the same corpus that provides the training data 204. For example, for each *C*ᵢ corresponding to a *D*ᵢ (*f*_{θ}(*C*)) in the training data 204, an alignment matrix *A* exists between *D*ᵢ and the barycenter *W*ᵢ of {*Dᵢ*}, where {*Dᵢ*} is the set of sequences corresponding to the same label *Lᵢ* as *C*ᵢ, and where the barycenter *W*ᵢ is determined through adjustment of weights in the training process described above. The alignment matrix *A* can be provided as a portion of the training data 600.

Label(s) 602 corresponding to each *A* in the training data 600 include data describing transmission of the signal *Cᵢ* corresponding to *A* (e.g., the signal for which*A*ᵢ characterizes time-warping between *Dᵢ* and barycenter *Wᵢ* corresponding to label *Lᵢ*). For example, the labels 602 can include trajectory parameters of the sensing devices relative to the emitter that emitted the signal to which A corresponds; time of arrival (TOA) and/or frequency of arrival (FOA) data describing the signal as-received at two or more sensing devices; attenuation effects applied to the signal; and/or other types of data. This data used as training labels can be obtained through known geolocation and emitter-identification techniques. For example, when *A* describes transformation corresponding to an RF signal (e.g., a GPS signal, a radar signal, a telephone signal, or another type of signal) received at two or more sensing devices having known coordinates/trajectories (e.g., in the case of satellite sensing devices, known ephemeris), TOA and FOA can be derived from TDOA/FDOA measurements recovered from CAF processing on the signal as-received at the two or more sensing devices. CAF processing can also be performed on signals received at one sensing device and compared to a matched filter to obtain TOA and FOA. The matched filter and a signal are used an input into a binary CAF operator, and an output of the CAF operator includes time offset and frequency offset between the matched filter and the signal, based on which TOA and FOA data can be determined. As another example, when *A* describes transformation corresponding to a signal that has been assigned to a known emitter having a known location/velocity at time of emission, the known trajectory parameters can be used as a label, and/or a TOA/FOA corresponding to the known trajectory parameters can be used as a label.

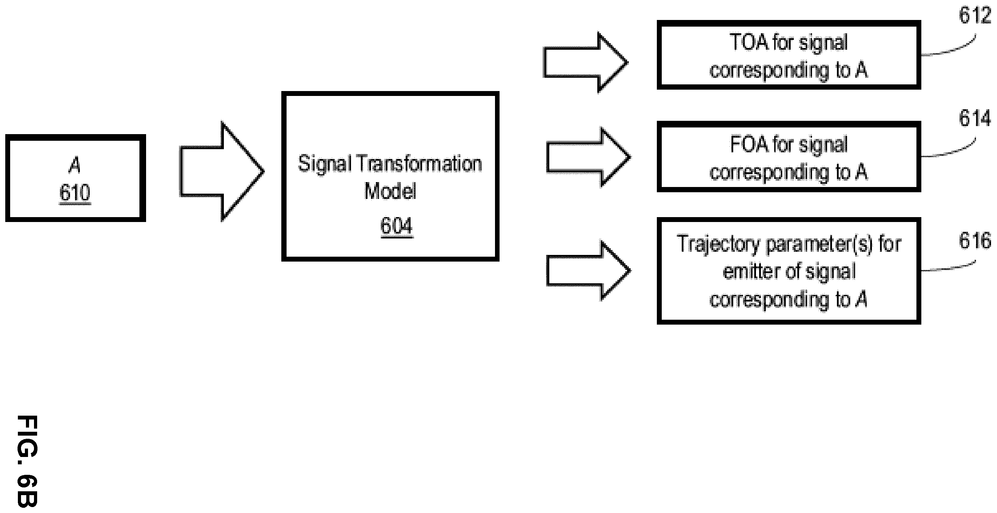

As a result of the training (606), a signal transformation model (STM) 604 is obtained. The STM 604 can include a CNN, an RNN, an MLP, a transformer network, or another type of learning network. As shown in FIG. 6B, the STM 604 is configured to receive, as input, an alignment matrix A (610) and to determine, as output, information describing emission of the signal, such as TOA (612), FOA (614), and/or trajectory parameter(s) of the sensing devices relative to the emitter or vice-versa (616). In some implementations, separate STMs are trained to output different types of these or other data (single-output regression), while in other implementations an STM is trained to output multiple types of these or other data (e.g., dual-output or triple-output regression).

In some implementations, instead of, or in addition to, providing particular trajectory parameter(s) of the sensing devices relative to the emitter (e.g., a geolocated position of the emitter) or vice-versa, the output of the STM 604 can be used to perform tests related to the trajectory parameter(s). These tests can provide less-precise motion information than would be provided by an exact geolocation estimate. For example, a test result can indicate whether an emitter is airborne or on the ground, whether the emitter is in a particular region (e.g., a land, sea, air, or orbital region), whether the emitter is more likely to be in a first region or a second region, and/or whether the emitter is traveling with a velocity within a particular velocity range, among other testable characteristics. In some implementations, the region is a particular portion of the Earth's surface. For example, the Earth's surface can be tiled into multiple regions (e.g., hexagonal or square regions, such as 10° by 10° regions) associated with a geospatial indexing system. In some implementations, a test result includes a probability that a particular hypothesis is true.

In some implementations, test results are determined based on TOA/FOA data output by the STM 604. The TOA/FOA data are compared to predicted values of TOA/FOA for signals emitted from a hypothesized location (e.g., a region) at a hypothesized time. A degree of match between the determined TOA/FOA and the predicted TOA/FOA indicates a likelihood of emission from the hypothesized location at the hypothesized time. Further details on determination of signal emission parameters are provided in U.S. Patent No. 10,466,336.

In some implementations, the ECM 202 and the STM 604 can be implemented as a combined machine learning network, trained using a soft-DTW loss function, that performs the functionalities described above with respect to both models, e.g., a combined machine learning model that is trained as described for ECM 202 and STM 604. The combined machine learning model receives, as input, a signal received at a sensing device and provides, as output, a transform-stripped analogue of the signal (e.g., D'), TOA/FOA data characterizing the signal, trajectory parameters of the emitter and/or test results that describe position/motion information of the emitter, a classification of the emitter by a label used for training (e.g., an identity of the emitter), or a combination of these results.

In some implementations, a trained machine learning model (e.g., a trained machine learning model on a sensing device) is updated based on newly-received signals (e.g., signals detected at the sensing device). For example, determinations based on one or more machine learning model outputs, such as labels determined to correspond to a received signal or TOA/FOA data determined for the signal, can be compared to known true information characterizing the signal. The known true information can be obtained from a separate analysis, such as by cross-referencing with a third-party data source or based on CAF processing (e.g., CAF processing performed at a ground station). When the comparisons indicate poor performance of the machine learning model, in some implementations the machine learning model can be retrained, e.g., using the signal as training data and using the known true information as a label for the training data. In some implementations, the machine learning model can be retrained over time such that newer training data is emphasized more than older training data, e.g., weighted more heavily in calculation of the cross-entropy loss function.

The ECM 202 and the STM 604 described above can be stored on and run on sensing devices such as satellites, UAVs, and other mobile sensors. Local computing power on these sensing devices is typically limited, such that performing alternative signal analysis methods, such as CAF processing, can result in overburdened processing systems and, accordingly, slow obtaining of processing results such as emitter identities, trajectory parameters, and transform-stripped signals. By contrast, running a trained machine learning model such as the ECM 202 and the STM 604 is typically less computationally-intensive than performing CAF processing, such that processing can be performed onboard a sensing device to analyze detected signals without having to transfer the detected signals to another processing system, such as a ground station. Note that the machine learning models need not be run on a sensing device but, rather, can be run on one or more other computing systems, such as a ground station or a cloud computing system. Training of the machine learning networks can be performed on a sensing device, at a ground station, on a cloud computing system, or on another computer device. Because the training tends to be computationally intensive and to rely on large amounts of data, in some implementations it is preferable to perform the training on a computing system besides a sensing device, and to subsequently transfer an already-trained machine learning model to a sensing device (e.g., by remote transmission).

In addition, unlike some alternative methods such as CAF processing, the methods described in this disclosure can recover transform-stripped signals and emitter information based on signals received at a single sensing device ("one-ball geolocation"). This can allow for reduced network usage (e.g., reduced usage of radio links between ground stations and sensing devices or between sensing devices) compared to alternative methods that are based on detection at multiple sensing devices, because sensed signal data need not be transferred between sensing devices or to a common processing location. More fundamentally, analysis based on signals received at a single sensing device can allow for fewer sensing devices to be deployed and managed, or for a given number of sensing devices to be used for more tasks, reducing sensing/monitoring costs and complexity, in contrast to systems that rely solely on clusters or other groups of sensing devices. In addition, because it is not necessary to share signal data between multiple sensing devices, sensing security can be improved by removing the shared signal data as a possible vector for detection of the sensing devices.

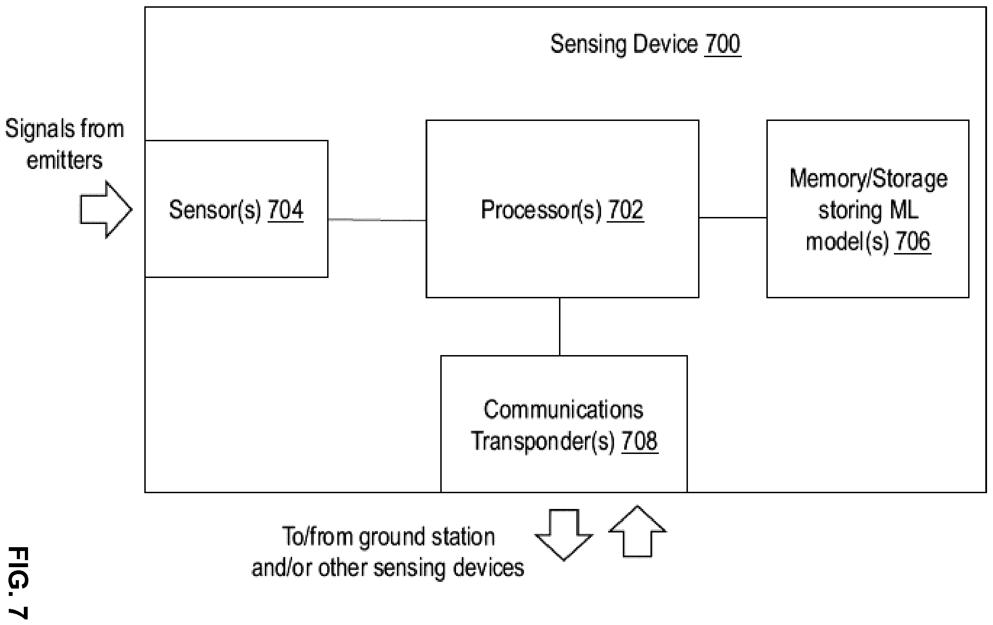

As shown in FIG. 7, a sensing device 700, such as a satellite or a UAV such as sensing devices 104, includes one or more processors 702, one or more sensors 704, a memory and/or storage 706, and one or more communications transponders 708. The processors 702 are configured to perform operations based on instructions stored in the memory/storage 706. For example, the processors 702 are configured to obtain, from the sensors 704, data indicative of signals sensed by the sensors 704 (e.g., sampled time series of the signals). In some implementations, the memory/storage 706 includes one or more machine learning models, such as the ECM 202 and/or the STM 604, and the processors 702 are configured to input time series of the signals into the machine learning models to determine, as output of the machine learning models, information about emitters of the signals. The memory/storage 706 can include algorithms (e.g., TOA/FOA algorithms) that can be applied to outputs of the machine learning models to determine information about emitters of the signals.

The sensors 704 can include, for example one or more RF antennas. The sensors 704 can include auxiliary signal-processing elements such as receivers, tuners, and/or filters, that process signals received at the sensors 704. In some implementations, the sensors 704 include one or more digitizers, e.g., an analog to digital (A/D) converter that convers received analog emitter signals into a digital time series for processing by the processors 702.

The communications transponders 708 (e.g., RF transponders) communicate with other sensing devices, and/or with ground stations. For example, the communications transponders 708 can include downlink/uplink communications transponders, which communicate with a ground station for command and control instructions, to transmit signals received at the sensing device 700, and/or to transmit processed information about the signals following processing performed onboard the sensing device 700. The communications transponders 708 can receive, from a ground station, machine learning models for storage on the memory/storage 706, the machine learning models having been trained at the ground station and/or by another computing system. In some implementations, the communications transponders 708 include crosslink communications transponders which communicate with other nearby sensing devices to coordinate command and control functions, tasking, synchronous observation, sharing received signals, and computing information about multi-channel recordings, among other possible operations.

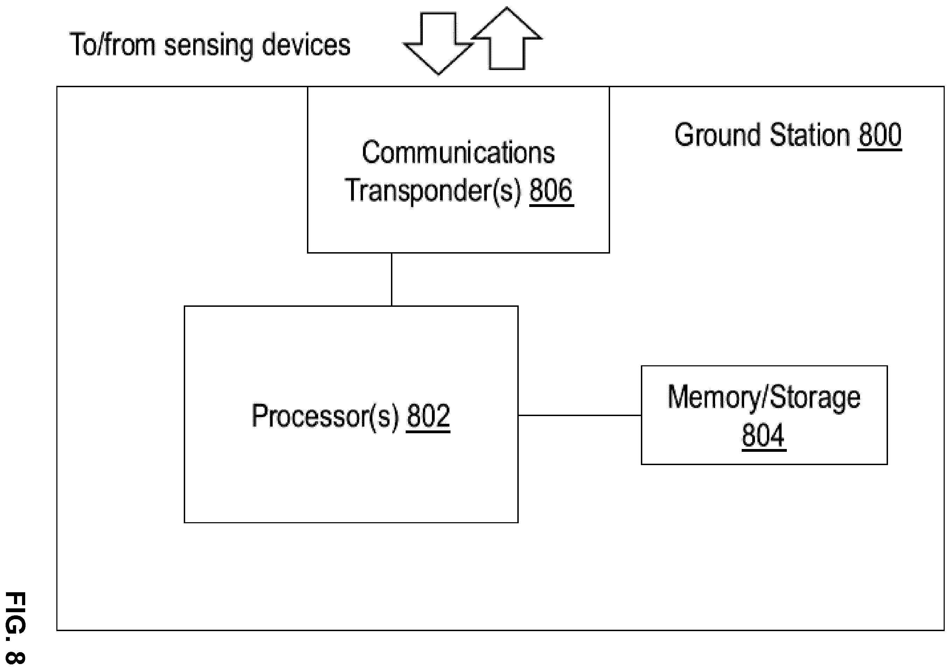

As shown in FIG. 8, an example ground station 800 (e.g., ground station 110) includes one or more processors 802, a memory/storage 804, and one or more communications transponders 806. The processors 802 are configured to perform operations based on instructions stored on the memory/storage 804. For example the processors are configured to access training data stored on the memory/storage 804 (e.g., training data 204 and/or training data 600) and apply the training data to train one or more machine learning networks using soft-DTW loss functions. The processors are configured to provide trained machine learning models to sensing devices using the communications transponders 806. Operations can include, among others, processing signals received from sensing devices, and transmitting command and control signals to the sensing devices.

The communications transponders 806 (e.g., RF transponders) communicate with the sensing devices. For example, the communications transponders 806 can include downlink/uplink communications transponders that are used to transmit command and control instructions, trained machine learning models, analysis algorithms, and updates thereof, to the sensing devices, and to receive results of analyses from the sensing devices (e.g., outputs of machine learning models run on the sensing devices).

The memory/storage 706, 804 store instructions that are executed by the processor. The memory/storage 706, 804 can store signals detected by the sensors 704, and/or results of computations performed by the processors (e.g., outputs of machine learning models, or trained machine learning models themselves). In various implementations, the memory/storage 706, 804 include one or more of random access memory (RAM), various types of read-only memory (ROM), other long-term storage memory, such as non-volatile flash memory, hard disk storage, storage disks, or other suitable storage media.

In some implementations, the processors 702, 802 are general purpose multiprocessors. In some implementations, the processors 702, 802 include digital signal processing (DSP) features, general-purpose pre-processors (GPP), general-purpose graphics processing units (GPGPU), or field-programmable gate arrays (FPGA), or a suitable combination of these. In some implementations, the processors 702, 802 include parallel processing capabilities, such as using included GPU hardware.

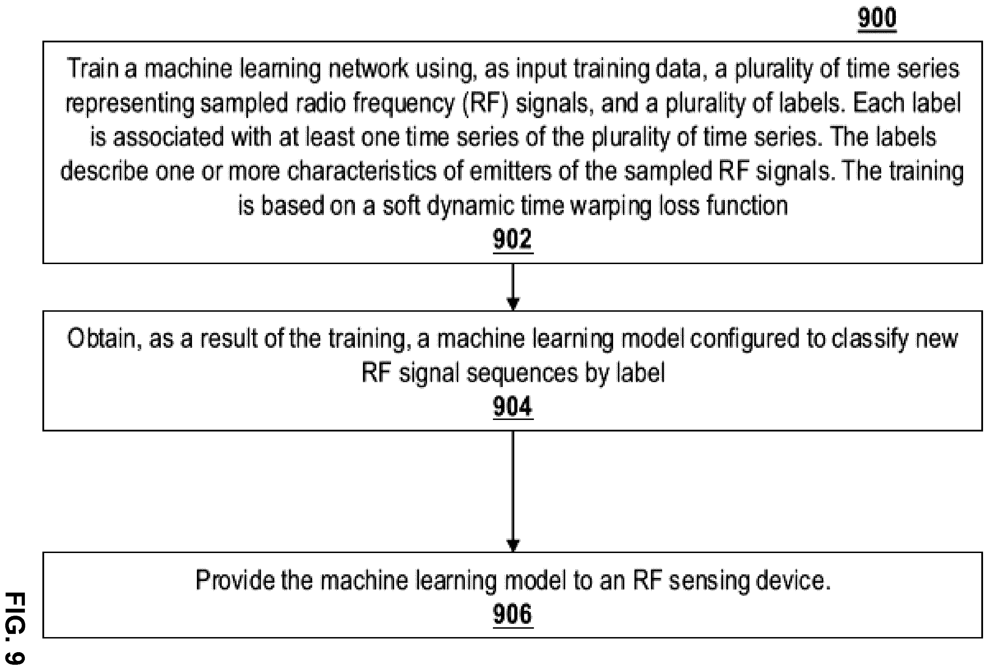

Referring now to FIG. 9, illustrated is an example method 900 for obtaining a machine learning model configured to analyze time series of signals such as RF signals. The method 900 can be performed by any suitable computing system, such as by processors (e.g., processors 702) of a sensing device (e.g., sensing devices 104/700), processors (e.g., processors 802) of a ground station (e.g., ground station 110/800), another computing system such as a distributed/cloud-based computing system, or a combination thereof.

In the method 900, a machine learning network is trained using, as input training data, a plurality of time series representing sampled radio frequency (RF) signals, and a plurality of labels (902). Each label is associated with at least one time series of the plurality of time series. The labels describe one or more characteristics of emitters of the sampled RF signals. The training is based on a soft dynamic time warping (soft-DTW) loss function.

The soft-DTW loss function can be incorporated into the training in various ways. In some implementations, the machine learning network includes, for each label of the plurality of labels, a corresponding soft dynamic time warping (soft-DTW) terminal associated with the label. For example, as shown in FIG. 3, each soft-DTW terminal 304 is associated with a corresponding label *L*. The soft-DTW terminals include weights, and a value of each soft-DTW terminal is based on a soft-DTW loss function based on the weights of the soft-DTW terminal. For example, each soft-DTW terminal 304 includes weights *W*; a value of the soft-DTW terminal 304 is based on a soft-DTW loss function of the weights *W*. Training the machine learning network can include iteratively adjusting the weights of the soft-DTW terminals so as to reduce a value of at least one loss function.

In some implementations, the at least one loss function has a value that depends on values of the soft-DTW terminals, e.g., based on values of multiple soft-DTW loss functions corresponding to multiple soft-DTW terminals. For example, in some implementations, the at least one loss function includes a cross-entropy loss function, such as the k-state cross-entropy loss function 310. The weights can be adjusted so as to, for each label of the plurality of labels, (i) reduce a value of a soft-DTW loss function corresponding to the label when the soft-DTW loss function is based on a time series of the plurality of time series that is associated with the label, and (ii) increase the value of the soft-DTW loss function corresponding to the label when the soft-DTW loss function is based on a time series of the plurality of time series that is not associated with the label. As described in reference to FIG. 3, a shared loss function such as the cross-entropy loss function allows for simultaneous training of weights of different soft-DTW terminals to incentivize separation between input classes (labels) for the purposes of classification.

In some implementations, the soft-DTW loss function of the soft-DTW terminal characterizes a difference between (i) a sequence of the weights of the soft-DTW terminal and (ii) one or more derived sequences obtained by processing time series of the plurality of time series. For example, derived sequences *D* are determined for each *C* used for training of machine learning network 300, and values of soft-DTW loss functions can be calculated as soft-DTW(D, *W*), where W is a sequence of weights of a soft-DTW terminal corresponding to a label *L* associated with *C*.

In some implementations, the machine learning network trained in process 902 includes a machine learning component containing multiple additional weights. The machine learning component can be configured to determine the one or more derived sequences based on the plurality of additional weights, and training the machine learning network can include adjusting the plurality of additional weights. For example, machine learning network 300 includes machine learning component 302.

Referring again to FIG. 9, as a result of the training, a machine learning model is obtained, the machine learning model configured to classify new RF signal sequences by label (904). For example, given a new RF signal sequence *C*, ECM 202 can be used to determine a classification by a set of labels *L* , where any label *L* can identify an emitter or other characteristic of the new RF signal sequence *C*. In some implementations, the machine learning model includes a sequence of weights *W* corresponding to the label. In some implementations, the sequence of weights W forms a barycenter corresponding to the label L, and the barycenter is included in the machine learning model.

The machine learning model is provided to an RF sensing device (906). For example, the machine learning model is transmitted from a ground station to a sensing device such as a satellite or an aerial vehicle.

In some implementations, the method 900 includes providing a detected RF signal to the machine learning model; determining, as an output of the machine learning model, a sequence corresponding to the detected RF signal; and determining, based on the sequence, a mapping corresponding to a signal transform that acted on the detected RF signal. For example, based on a detected RF signal *C*, a corresponding sequence *D* is determined based on the ECM 202. An alignment matrix *A* is determined between *D* and a barycenter *W* corresponding to a label *L* with which *C* was classified by the ECM 202. The alignment matrix A is an example of the mapping. The mapping includes information about the signal transform, such that various information about emission of *C* can be determined, such as a transform-stripped analogue of *C* (e.g., *D*'), trajectory/location information of an emitter of *C*, and/or other information as described above.

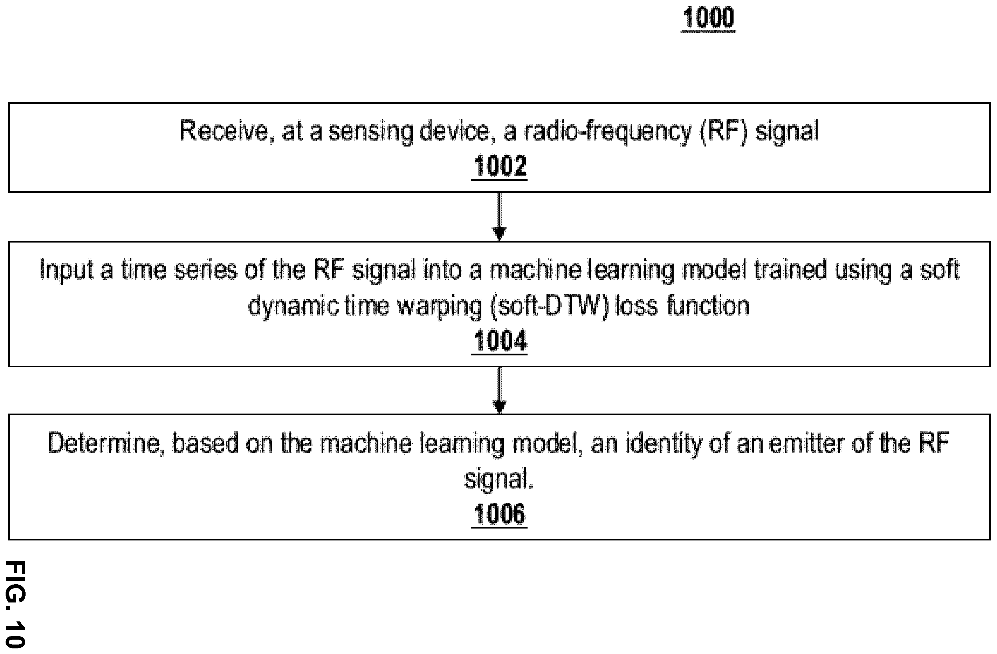

Referring now to FIG. 10, illustrated is an example method 1000 for applying a trained machine learning model to analysis of received signals such as RF signals. The method 1000 can be performed by any suitable computing system, such as by processors (e.g., processors 702) of a sensing device (e.g., sensing devices 104/700), processors (e.g., processors 802) of a ground station (e.g., ground station 110/800), another computing system such as a distributed/cloud-based computing system, or a combination thereof.

In the method 1000, an RF signal is received at a sensing device (1002). For example, the RF signal can be received at a satellite or an aerial vehicle, or at another type of sensing device. The RF signal can be received as a time series (sequence) *C*.

A sampled time series of the RF signal is input into a machine learning model trained using a soft-DTW loss function (1004). For example, as shown in FIG. 4, *C* is input into ECM 202.

Based on the machine learning model, an identity of an emitter of the RF signal is determined (1006). For example, as shown in FIG. 4, an *L* classification for *C* is determined, where *L* indicates the emitter of the RF signal.

In some implementations, based on the machine learning model, a mapping corresponding to a signal transform (e.g., Doppler-shift and/or time-shift) that acted on the RF signal is determined. For example, given *C, D* is determined based on ECM 202, and an alignment matrix *A* is determined between *D* and a barycenter *W* corresponding to the *L* with which *C* was classified. The alignment matrix *A* is an example of the mapping. Data characterizing an RF channel between the emitter of the RF signal and the sensing device can be determined. For example, *A* can be provided into STM 604 (where STM 604 can be trained as shown in FIG. 6A), to obtain trajectory parameters 616, TOA data 612, and/or FOA data 614.

In some implementations, the mapping can be used to determine a transform-stripped analogue of the RF signal. For example, *D'* can be determined based on *D* and the alignment matrix *A,* where *D'* is a transform-stripped analogue of C.

The disclosed and other examples can be implemented as one or more computer program products, for example, one or more modules of computer program instructions encoded on a computer readable medium for execution by, or to control the operation of, data processing apparatus. The implementations can include single or distributed processing of algorithms. The computer readable medium can be a machine-readable storage device, a machine-readable storage substrate, a memory device, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A system may encompass all apparatus, devices, and machines for processing data, including by way of example a programmable processor, a computer, or multiple processors or computers. A system can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and the computer program can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed for execution on one computer or on multiple computers that are located at one site or distributed across multiple sites and interconnected by a communications network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer can include a processor for performing instructions and one or more memory devices for storing instructions and data. Generally, a computer can also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data can include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this document may describe many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination in some cases can be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A method comprising:
receiving, at a sensing device, a radio-frequency (RF) signal;
inputting a sampled time series of the RF signal into a machine learning model trained using a soft dynamic time warping (soft-DTW) loss function; and
determining, based on the machine learning model, an identity of an emitter of the RF signal.

2. The method of claim 1, comprising:
determining, based on the machine learning model, a mapping corresponding to a signal transform that acted on the RF signal; and
determining, based on the mapping, data characterizing an RF channel between the emitter of the RF signal and the sensing device.

3. The method of claim 2, wherein the signal transform comprises at least one of a Doppler shift or a time shift.

4. The method of claim 2, wherein the data characterizing the RF channel comprises a location of the emitter, and/or
wherein the data characterizing the RF channel comprises a probability that the emitter is located in a particular region, and/or
wherein the data characterizing the RF channel comprises at least one of time-of-arrival data or frequency-of-arrival data of the RF signal received at the sensing device.

5. The method of claim 2, wherein the mapping comprises a mapping between (i) a sequence derived from the sampled time series of the RF signal and a barycenter corresponding to the identity of the emitter.

6. The method of claim 2, wherein the mapping comprises an alignment matrix.

7. The method of claim 2, comprising determining, based on the mapping, a transform-stripped version of the RF signal.

8. The method of claim 1, wherein determining the identity of the emitter comprises determining the identity of one of a particular ship, a particular satellite, or a type of radar system.

9. The method of claim **1,** wherein the sensing device comprises an aerial vehicle.

10. The method of claim 1, wherein the aerial vehicle is one of a satellite or an aerial drone.

11. The method of claim 1, wherein the machine learning model is stored on the sensing device, and
wherein inputting the sampled time series into the machine learning model and determining the identity are performed by a computing system on board the sensing device.

12. The method of claim 1, wherein the machine learning model is trained using, as input training data,
a plurality of time series representing sampled radio frequency (RF) signals, and
a plurality of labels, each label associated with at least one time series of the plurality of time series, the labels describing one or more characteristics of emitters of the sampled RF signals.

13. The method of claim 1, wherein the machine learning model comprises a sequence representing a barycenter corresponding to the identity of the emitter.

14. A non-transitory, computer-readable medium storing instructions that, when executed by one or more processors, cause the one or more processors to perform the method as claimed in any one of the preceding claims.

15. A system comprising:
one or more computers; and
one or more storage devices storing instructions that, when executed by the one or more computers, cause the one or more computers to perform the method as claimed in any one of claims 1 to 13.
